# EUROPÄISCHE PATENTSCHRIFT

(11) **EP 2 531 844 B1**
(45) Veröffentlichungstag und Bekanntmachung des Hinweises auf die Patenterteilung: **01.10.2014**
(21) Anmeldenummer: 10790861.8
(22) Anmeldetag: 20.12.2010
(51) Int. Cl.: G01N 27/22, G01N 27/414

(54) **VERFAHREN ZUR DETEKTION VON ZWEI ODER MEHR GASSPEZIES**
METHOD FOR DETECTING TWO OR MORE GAS SPECIES
PROCÉDÉ DE DÉTECTION DE DEUX ESPÈCES GAZEUSES OU PLUS

(30) Priorität: 05.02.2010 DE 102010001624
(43) Veröffentlichungstag der Anmeldung: 12.12.2012
(73) Patentinhaber: Robert Bosch GmbH, 70442 Stuttgart (DE)
(72) Erfinder: LIEMERSDORF, Dirk, 74343 Sachsenheim (DE); FIX, Richard, 70839 Gerlingen (DE); KUNZ, Denis, 74199 Untergruppenbach (DE); MARTIN, Alexander, 93053 Regensburg (DE)
(86) Internationale Anmeldenummer: PCT/EP2010/070311
(87) Internationale Veröffentlichungsnummer: WO 2011/095257

(56) Entgegenhaltungen:
- US-A1- 2006 270 053
- ANDERSSON M ET AL: "Tailoring of field effect gas sensors for sensing of nonhydrogen containing substances from mechanistic studies on model systems", 2009 IEEE SENSORS IEEE PISCATAWAY, NJ, USA, 2009, Seiten 2031-2035, XP31618690, ISBN: 978-1-4244-4548-6
- TSUKADA K ET AL: "A Proton Pumping Gate Field-Effect Transistor for a Hydrogen Gas Sensor", IEEE SENSORS JOURNAL, IEEE SERVICE CENTER, NEW YORK, NY, US, Bd. 7, Nr. 9, 1. September 2007 (2007-09-01), Seiten 1268-1269, XP011187672, ISSN: 1530-437X, DOI: DOI:10.1109/JSEN.2007.901268
- LOFDAHL M ET AL: "Gas response dependence on gate metal morphology of field-effect devices", SENSORS AND ACTUATORS B, ELSEVIER SEQUOIA S.A., LAUSANNE, CH, Bd. 80, Nr. 3, 1. Dezember 2001 (2001-12-01), Seiten 183-192, XP004311807, ISSN: 0925-4005, DOI: DOI:10.1016/S0925-4005(01)00886-3 in der Anmeldung erwähnt

## Beschreibung

Die vorliegende Erfindung betrifft ein Verfahren zur Detektion von zwei oder mehr Gasspezies mit einem Feldeffekt-basierten Gassensor.

### Stand der Technik

Die Gassensitivität von Feldeffekt-basierten Gassensoren beruht - im Gegensatz zu resistiven Gassensoren - nicht auf einer Änderung der Leitfähigkeit der gassensitiven Schicht, sondern auf einer Änderung des von der gassensitiven Elektrode erzeugten elektrischen Feldes. Zu dieser Klasse der Gassensoren gehören zum Beispiel Feldeffekttransistor-Gassensoren, Halbleiterdiodensensor-Gassensoren, Metall-Isolator-Halbleiter-Gassensor (MIS, englisch: "metal insulator semiconductor") oder Kapazitätsstruktur-Gassensoren mit einer gassensitiven Elektrode, einer Gegenelektrode und einem dazwischen liegenden Dielektrikum.

Feldeffekt-basierte Gassensoren können auf mehrere Gasspezies sensitiv sein, da prinzipiell viele verschiedene Gasspezies mit einer gassensitiven Elektrode eines Feldeffekt-basierten Gassensors wechselwirken können.

Im Falle von gassensitiven Feldeffekttransistoren (ChemFETs) können verschiedene Änderungen der Gasumgebung zu einer Veränderung der Leitfähigkeit des Kanals und somit zu einer Veränderung des von der Source-Elektrode zur Drain-Elektrode fließenden Stroms führen. Ein gassensitiver Feldeffekttransistor wird beispielsweise in der Druckschrift US 5,698,771 beschrieben.

Um die Gassensitivität eines Gassensors zu variieren, werden verschiedene Ansätze verfolgt:
Um die Gassensitivität eines Gassensors zu variieren, werden verschiedene Ansätze verfolgt:
   Beispielsweise kann durch Variation des Aufbaus und der Zusammensetzung der gassensitiven Elektrode die Sensitivität eines Gassensors verändert werden. Dies wird beispielsweise in der Veröffentlichung: "Gas response dependence on gate metal morphology of field effect devices", I. Lundström et.al., Sensors and Actuators B 80 (2001), auf den Seiten 183 bis 192 beschrieben. Durch die Kombination verschiedener gassensitiver Elemente in einem Gassensor kann dann eine Selektivität für bestimmte Gasspezies erzielt werden.

Ein weiterer Ansatz ist der Betrieb von mehreren gassensitiven Elementen eines Gassensors bei unterschiedlichen Temperaturen. Dies wird beispielsweise in der Veröffentlichung: "Modulated operating temperature for MOS FET gas sensors - hydrogen recovery time reduction and gas discrimination" Lundström et.al., Sensors and Actuators B 93 (2003), auf den Seiten 276 bis 285 beschrieben. Alternativ dazu kann die Betriebstemperatur eines einzelnen gassensitiven Elements variiert werden. So kann die unterschiedliche Sensitivität bei verschiedenen Temperaturen zur Ausprägung von Selektivitäten genutzt werden.

Herkömmlicherweise werden Feldeffekt-basierte Gassensoren bei einer Gleichspannung betrieben. Eine Variation der Höhe der Gleichspannung kann dabei eine Auswirkung auf die Gassensitivität haben. Dies wird beispielsweise in der Veröffentlichung: "Influence of gate bias of MISiC-FET gas sensor device on the sensing properties ", A.L. Spetz et.al., Sensors and Actuators B 108 (2005), auf den Seiten 501 bis 507 beschrieben. Feldeffekt-basierte Gassensoren werden herkömmlicherweise nicht mit einer Wechselspannung betrieben.

Die US 2006/0270053 A1 offenbart einen Gassensor, welcher mittels Messung eines Wechselstroms einen Analyt detektiert.

### Offenbarung der Erfindung

Gegenstand der vorliegenden Erfindung ist ein Verfahren zur Detektion von zwei oder mehr Gasspezies in einem Gasspeziesgemisch, mit mindestens einem, beispielsweise einem, Feldeffekt-basierten Gassensor, welcher ein Gaselektroden-Gegeneiektroden-System mit einer gassensitiven Elektrode und einer Gegenelektrodeneinheit aufweist, und welches die Verfahrensschritte:
a) Anlegen einer ersten Wechselspannung oder eines ersten Wechselstroms mit einer ersten Frequenz, bei welcher die gassensitive Elektrode auf eine erste Gasspezies sensitiv ist, an das Gaselektroden-Gegenelektroden-System, und
   Messen eines ersten resultierenden Wechselstroms oder einer ersten resultierenden Wechselspannung an dem Gaselektroden-Gegenelektroden-System, und Bestimmen, insbesondere Berechnen, der Anwesenheit und/oder der Konzentration der ersten Gasspezies aus dem ersten resultierenden Wechselstrom oder der ersten resultierenden Wechselspannung; und
b) Anlegen einer zweiten Wechselspannung oder eines zweiten Wechselstroms mit einer zweiten Frequenz, bei welcher die gassensitive Elektrode auf eine zweite Gasspezies sensitiv ist, an das Gaselektroden-Gegenelektroden-System, und Messen eines zweiten resultierenden Wechselstroms oder einer zweiten resultierenden Wechselspannung an dem Gaselektroden-Gegenelektroden-System, und
   Bestimmen, insbesondere Berechnen, der Anwesenheit und/oder der Konzentration der zweiten Gasspezies aus dem zweiten resultierenden Wechselstrom oder der zweiten resultierenden Wechselspannung,
umfasst, wobei der mindestens eine Feldeffekt basierte Gassensor ein Metall-Isolator-Halbleiter Gassensor ist.

Es hat sich herausgestellt, dass die Sensitivität einer gassensitiven Elektrode eines Metall-Isolator-Halbleiter Gassensors gegenüber zu detektierenden Gasspezies stark von der Frequenz abhängig ist, wobei sich die Frequenz wiederum auf unterschiedliche Gasspezies unterschiedlich auswirkt. Dieser Effekt wird im Rahmen der vorliegenden Erfindung genutzt, indem durch geeignete Wahl der Frequenz bestimmte Gasspezies bevorzugt oder sogar selektiv gemessen werden.

Durch das erfindungsgemäße Verfahren können die Eigenschaften, wie die Selektivität, die Sensitivität, das Ansprechverhalten und/oder die Stabilität von Metall-Isolator-Halbleiter Gassensoren vorteilhafterweise verbessert werden.

Die frequenzabhängige Messung einzelner Gasspezies hat dabei insbesondere den Vorteil, dass durch geschickte Wahl der Frequenz Querempfindlichkeiten von einer Gasspezies gegenüber anderen im Gasspeziesgemisch vorhandenen Gasspezies kompensiert werden können. Dies ermöglicht einen selektiven Nachweis verschiedener Gasspezies mit nur einem Gassensor, ohne dass mehrere unterschiedlich aufgebaute gassensitive Elemente zwingend notwendig sind. Dies spart einerseits Herstellungskosten, vor allem jedoch Forschungs- und Entwicklungskosten, da aufwändige (meist empirische) Material-Screenings entfallen beziehungsweise minimiert werden können. Ferner können Gassensoren für das erfindungsgemäße Verfahren einfach aufgebaut sein und eine lange Lebensdauer aufweisen.

Durch das erfindungsgemäße Verfahren können zwei oder mehr Gasspezies bestimmt und für jede Gasspezies Daten ausgegeben werden. Es ist jedoch ebenso möglich, dass durch das erfindungsgemäße Verfahren zwar zwei oder mehr Gasspezies bestimmt werden, wobei jedoch nur Daten von einer Zahl an Gasspezies ausgegeben werden, welche geringer als die gesamte Zahl der bestimmten Gasspezies ist. Insbesondere können durch das erfindungsgemäße Verfahren zwei oder mehr Gasspezies bestimmt und die Daten von einer oder mehr, insbesondere einer, Gasspezies ausgeben werden. Beispielsweise kann in Verfahrensschritt a) ein Summensignal von zwei Gasspezies und in Verfahrensschritt b) ein Einzelsignal einer der beiden in Verfahrensschritt a) bestimmten Gasspezies bestimmt werden, woraus wiederum das Einzelsignal der anderen der beiden in Verfahrensschritt a) bestimmten Gasspezies bestimmt und ausgegeben werden kann.

Die Gegenelektrodeneinheit kann eine Elektrodenanordnung, beispielsweise aus einer Source-Elektrode, einer Drain-Elektrode und einem dazwischen liegenden Kanal, sein.

Durch einen oder mehrere weitere, zu Verfahrensschritt a) und b) analoge Verfahrensschritte x) können vorteilhafterweise drei oder mehr Gasspezies mit einem Gassensor detektiert werden.

Im Rahmen einer Ausführungsform umfasst das Verfahren daher nach dem Verfahrensschritt b) einen oder mehrere Verfahrensschritte:
x) Anlegen einer weiteren Wechselspannung oder eines weiteren Wechselstroms mit einer weiteren unterschiedlichen Frequenz, bei welcher die gassensitive Elektrode auf eine weitere Gasspezies sensitiv ist, an das Gaselektroden-Gegenelektroden-System, und
   Messen eines weiteren resultierenden Wechselstroms oder einer weiteren resultierenden Wechselspannung an dem Gaselektroden-Gegenelektroden-System, und
   Bestimmen, insbesondere Berechnen, der Anwesenheit und/oder der Konzentration der weiteren Gasspezies aus dem weiteren resultierenden Wechselstrom oder der weiteren resultierenden Wechselspannung.

Aus Phasenverschiebung zwischen den angelegten Wechselspannungen und den korrespondierenden, resultierenden Wechselströmen beziehungsweise aus der Phasenverschiebung zwischen den angelegten Wechselströmen und den korrespondierenden, resultierenden Wechselspannungen lassen sich physikalische Größen, wie die Kapazität, der Wechselstromleitwert, die Permittivität, der Phasenwinkel, der Verlustwinkel, der Dissipationskoeffizient, der Realteil der komplexen Impedanz und der Imaginärteil der komplexen Impedanz, bestimmen, insbesondere berechnen.

Diese physikalischen Größen können bei einer Frequenz durch unterschiedliche Gasspezies unterschiedlich beeinflusst werden. Zum Beispiel können zwei unterschiedliche Gasspezies bei einer Frequenz eine erste physikalische Größe gleichartig beeinflussen, jedoch bei derselben Frequenz eine zweite physikalische Größe unterschiedlich beziehungsweise gar nicht beeinflussen. Zum Beispiel kann bei einer Frequenz die Kapazität durch zwei unterschiedliche Gasspezies beeinflusst werden, wobei die beiden Gasspezies jedoch den Wechselstromleitwert unterschiedlich beeinflussen beziehungsweise nicht beeinflussen können. Beispielsweise kann die erste Gasspezies den Wechselstrom leitwert erhöhen oder senken und die zweite Gasspezies keinen Einfluss auf den Wechselstromleitwert haben. So kann aus der Kapazität ein Summensignal von der ersten und zweiten Gasspezies und aus dem Wechselstromleitwert der Anteil der ersten Gasspezies am Summensignal ermittelt werden, was wiederum die Bestimmung, insbesondere Berechnung, des Anteils der zweiten Gasspezies am Summensignal ermöglicht.

Zudem können physikalische Größen bei unterschiedlichen Frequenzen unterschiedlich beeinflusst werden. So kann eine Gasspezies bei einer Frequenz eine physikalische Größe erhöhen, jedoch bei einer anderen Frequenz dieselbe physikalische Größe erniedrigen und bei einer weiteren Frequenz dieselbe physikalische Größe nicht beeinflussen. Beispielsweise kann eine Gasspezies bei einer Frequenz den Wechselstromleitwert erhöhen, jedoch bei einer anderen Frequenz den Wechselstromleitwert erniedrigen und bei einer weiteren Frequenz den Wechselstromleitwert nicht beeinflussen.

Die zuvor geschilderten Verhaltensweisen können insbesondere dann vorteilhaft genutzt werden, wenn die gassensitive Elektrode bei der ersten Frequenz nicht nur auf die erste Gasspezies beziehungsweise bei der zweiten Frequenz nicht nur auf die zweite Gasspezies beziehungsweise bei der weiteren Frequenz nicht nur auf die weitere Gasspezies sensitiv ist.

Im Rahmen einer weiteren Ausführungsform können die Kapazität und der Wechselstromleitwert und gegebenenfalls mindestens eine weitere physikalische Größe des Gaselektroden-Gegenelektroden-Systems, ausgewählt aus der Gruppe, bestehend aus Permittivität, Phasenwinkel, Verlustwinkel, Dissipationskoeffizient, Realteil der komplexen Impedanz und Imaginärteil der komplexen Impedanz, bestimmt, insbesondere berechnet, werden. Oder es können die Kapazität und mindestens eine weitere physikalische Größe des Gaselektroden-Gegenelektroden-Systems, ausgewählt aus der Gruppe, bestehend aus Permittivität, Phasenwinkel, Verlustwinkel, Dissipationskoeffizient, Realteil der komplexen Impedanz und Imaginärteil der komplexen Impedanz, und gegebenenfalls der Wechselstromleitwert bestimmt, insbesondere berechnet, werden. Oder es können der Wechselstromleitwert und mindestens eine weitere physikalische Größe des Gaselektroden-Gegenelektroden-Systems, ausgewählt aus der Gruppe, bestehend aus Permittivität, Phasenwinkel, Verlustwinkel, Dissipationskoeffizient, Realteil der komplexen Impedanz und Imaginärteil der komplexen Impedanz, und gegebenenfalls die Kapazität bestimmt, insbesondere berechnet, werden.

Im Rahmen einer weiteren Ausführungsform wird daher aus den resultierenden Wechselströmen und/oder den resultierenden Wechselspannungen jeweils mindestens die Kapazität des Gaselektroden-Gegenelektroden-Systems bestimmt, insbesondere berechnet, und in die Bestimmung, insbesondere Berechnung, der Anwesenheit und/oder der Konzentration der Gasspezies einbezogen.

Im Rahmen einer weiteren Ausführungsform wird daher aus den resultierenden Wechselströmen und/oder den resultierenden Wechselspannungen jeweils mindestens der Wechselstromleitwert (beziehungsweise Wechselstromwiderstand) des Gaselektroden-Gegenelektroden-Systems bestimmt, insbesondere berechnet, und in die Bestimmung, insbesondere Berechnung, der Anwesenheit und/oder der Konzentration der Gasspezies einbezogen.

Durch eine überlagerte Gleichspannung oder einen überlagerten Gleichstrom kann vorteilhafterweise die Elektronenkonzentration in der gassensitiven Elektrode und damit die Empfindlichkeit der gassensitiven Elektrode bei den einzelnen Frequenzen zusätzlich variiert werden.

Im Rahmen einer weiteren Ausführungsform wird daher in den Verfahrensschritten a) und/oder b) und/oder x) die angelegte Wechselspannung mit einer Gleichspannung oder der angelegte Wechselstrom mit einem Gleichstrom überlagert.

Das Verfahren ist insbesondere vorteilhaft für Gassensoren, die eine nanostrukturierte gassensitive Elektrode aufweisen. Derartige gassensitive Elektroden werden beispielsweise in den Druckschriften WO 2008/043781 A1, WO 2008/046785 A2, EP 1 978 132 A2 und DE 10 2007 040 726 A1 beschrieben.

Im Rahmen einer weiteren Ausführungsform werden die Verfahrensschritte a), b) und gegebenenfalls x) zu unterschiedlichen Zeiten an einem einzigen Feldeffekt-basierten Gassensor durchgeführt. Insbesondere können die Verfahrensschritte a) und b) und gegebenenfalls x) im Anschluss aneinander oder zeitlich beabstandet zueinander an einem einzigen Gassensor durchgeführt werden. Dadurch können vorteilhafterweise mit nur einem Gassensor verschiedene Gasspezies zu unterschiedlichen Zeiten detektiert werden.

Im Rahmen einer weiteren Ausführungsform werden die Verfahrensschritte a), b) und gegebenenfalls x) zumindest teilweise gleichzeitig an mehreren Feldeffekt-basierten Gassensoren durchgeführt. Beispielsweise kann der Verfahrensschritt a) an einem ersten Gassensor und gleichzeitig der Verfahrensschritt b) an einem zweiten Gassensor und gegebenenfalls gleichzeitig der Verfahrensschritt x) an einem weiteren Gassensor durchgeführt werden. Auf diese Weise können gleichzeitig mehrere Gase bestimmt werden. Grundsätzlich können die Gassensoren dabei gleich oder unterschiedlich sein.
Das erfindungsgemäße Verfahren kann insbesondere zur Detektion von zwei oder mehr Gasspezies, beispielsweise ausgewählt aus der Gruppe, bestehend aus Sauerstoff, Wasserstoff, Stickstoff, Kohlenwasserstoffen, Kohlenmonoxid, Kohlendioxid, Wasser, Ammoniak und Stickoxiden, wie Stickstoffmonoxid und/oder Stickstoffdioxid, zum Beispiel in einem Abgas einer Verbrennungsmaschine, beispielsweise in einem Verbrennungsmotor eines Kraftfahrzeugs, ausgebildet sein.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: ist ein Graph zur Veranschaulichung der Abhängigkeit der Kapazität eines Gaselektroden-Gegenelektroden-Systems von der Frequenz einer Wechselspannung oder eines Wechselstroms; und
- Fig. 2: ist ein Graph zur Veranschaulichung der Abhängigkeit der Kapazität und des Wechselstromleitwerts von der anwesenden Gasspezies bei einer konstanten Frequenz.

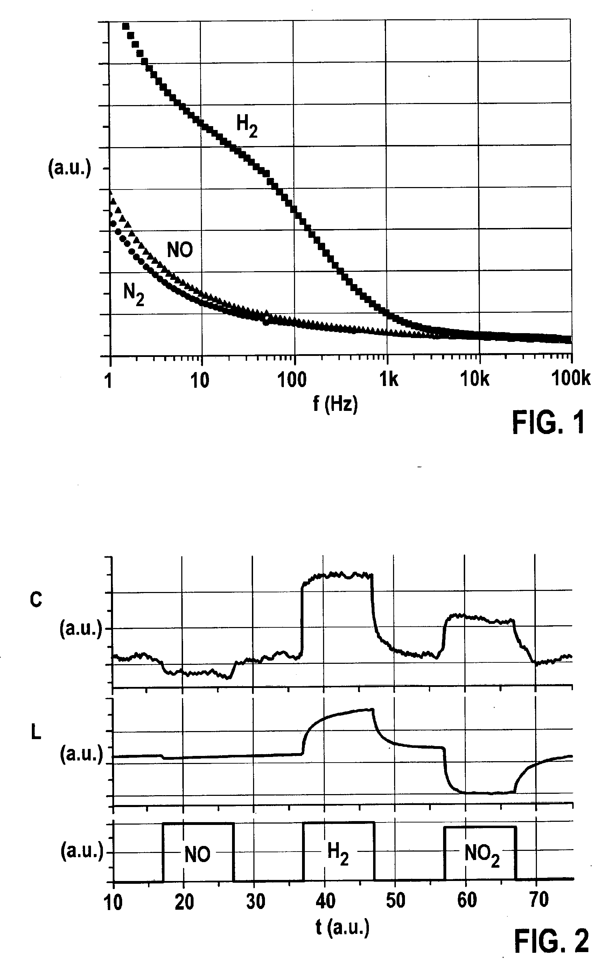

Figur 1 zeigt eine frequenzabhängige Messung der Kapazität eines Gaselektroden-Gegenelektroden-Systems in Gegenwart von Stickstoff (N₂), Stickstoffmonoxid (NO) und Wasserstoff (H₂). Figur 1 zeigt, dass die Kapazität eines Gaselektroden-Gegenelektroden-Systems stark von der angelegten Frequenz und der Gasspezies abhängt. Der bei der frequenzabhängigen Messung verwendete Feldeffekt-basierte Gassensor, ist in diesem Fall bei einer Frequenz von 100 Hz im Wesentlichen auf Wasserstoff sensitiv. Bei 10 Hz ist der Gassensor zusätzlich auf Stickstoffmonoxid sensitiv. Aus den Messergebnissen einer ersten Messung mit einer Wechselspannung mit einer Frequenz von 100 Hz und eine zweite Messung mit einer Wechselspannung mit einer Frequenz von 10 Hz, kann daher die Wasserstoffkonzentration und die Stickstoffmonoxidkonzentration bestimmt werden.

Da sich die Gasspezies, in diesem Fall Wasserstoff und Stickstoffmonoxid, auf weitere Messgrößen, beispielsweise den Wechselstromleitwert, unterschiedlich auswirken können, kann das Verfahren weiterhin dadurch verbessert werden, dass gleichzeitig mit der Kapazität weitere Messgrößen, beispielsweise der Wechselstromleitwert, erfasst werden.

Figur 2 zeigt beispielhaft den Einfluss von Stickstoffmonoxid, Wasserstoff und Stickstoffdioxid auf die Kapazität und den Wechselstromleitwert bei einer konstanten Frequenz. Figur 2 illustriert, dass Stickstoffmonoxid bei der gewählten Frequenz weder die Kapazität noch den Wechselstromleitwert beeinflusst. Wasserstoff hingegen erhöht bei der gewählten Frequenz sowohl die Kapazität als auch den Wechselstromleitwert. Stickstoffdioxid hingegen erhöht die Kapazität und senkt den Wechselstromleitwert bei der gewählten Frequenz. Figur 2 zeigt weiterhin, dass die Kapazitäts- und Wechselstromleitwertsänderung bei Wasserstoff das gleiche Vorzeichen aufweisen. Bei Stickstoffdioxid hingegen unterscheiden sich die beiden Signalpolaritäten. Aus der Kombination dieser Informationen kann somit auf gemessene Gasspezies zurückgeschlossen werden. Bei anderen Frequenzen können die Abhängigkeiten der Messgrößen von den einzelnen Gasspezies anders sein. Aus Messungen bei unterschiedlichen Frequenzen, können daher weitere Informationen gewonnen und Rückschlüsse auf die gemessenen Gasspezies gezogen werden.

Für die Durchführung der Messung ist der Feldeffekt-basierte Gassensor als Messeinreichtung an eine Spannungsversorgungs-Einheit angeschlossen, die die Messeinrichtung und damit den Gassensor mit einer Betriebsspannung einer vorgegebenen Frequenz beaufschlagt. Die Spannungsversorgungseinheit wird dabei von einer Steuerungseinrichtung angesteuert, die je nach dem zu messenden Gas den Gassensor mit einer Wechselspannung einer vorgegebenen Frequenz beaufschlagt. Ein Messprogramm für die Durchführung der Messung ist hierbei bevorzugt in einer Speichereinrichtung der Steuerungseinrichtung abgelegt. Ferner greift auf die Anschlüsse des Gassensors eine Auswerteeinrichtung zu, die entsprechend die Messergebnisse des Gassensors erfasst. In einer weiteren Ausführungsform kann zudem eine Schnittstelle zwischen der Steuereinrichtung oder der Spannungsversorgungseinrichtung sowie der Messeinrichtung vorhanden sein, damit die Auswerteeinrichtung unmittelbar die Spannung bzw. die Stromstärke sowie die Frequenz des an den Gassensor angelegten Ansteuerungssignals erfassen kann.

## Patentansprüche

1. Verfahren zur Detektion von zwei oder mehr Gasspezies in einem Gasspeziesgemisch mit mindestens einem Feldeffekt-basierten Gassensor, welcher ein Gaselektroden-Gegenelektroden-System mit einer gassensitiven Elektrode und einer Gegenelektrodeneinheit aufweist, umfassend die Verfahrensschritte:
a) Anlegen einer ersten Wechselspannung oder eines ersten Wechselstroms mit einer ersten Frequenz, bei welcher die gassensitive Elektrode auf eine erste Gasspezies sensitiv ist, an das Gaselektroden-Gegenelektroden-System, und
Messen eines ersten resultierenden Wechselstroms oder einer ersten resultierenden Wechselspannung an dem Gaselektroden-Gegenelektroden-System, und
Bestimmen der Anwesenheit und/oder der Konzentration der ersten Gasspezies aus dem ersten resultierenden Wechselstrom oder der ersten resultierenden Wechselspannung; und
b) Anlegen einer zweiten Wechselspannung oder eines zweiten Wechselstroms mit einer zweiten Frequenz, bei welcher die gassensitive Elektrode auf eine zweite Gasspezies sensitiv ist, an das Gaselektroden-Gegenelektroden-System, und
Messen eines zweiten resultierenden Wechselstroms oder einer zweiten resultierenden Wechselspannung an dem Gaselektroden-Gegenelektroden-System, und
Bestimmen der Anwesenheit und/oder der Konzentration der zweiten Gasspezies aus dem zweiten resultierenden Wechselstrom oder der zweiten resultierenden Wechselspannung, wobei der mindestens eine Feldeffekt-basierte Gassensor ein Metall-Isolator-Halbleiter-Gassensor ist.

2. Verfahren nach Anspruch 1, **dadurch gekennzeichnet, dass** das Verfahren nach dem Verfahrensschritt b) einen oder mehrere Verfahrensschritte:
x) Anlegen einer weiteren Wechselspannung oder eines weiteren Wechselstroms mit einer weiteren unterschiedlichen Frequenz, bei welcher die gassensitive Elektrode auf eine weitere Gasspezies sensitiv ist, an das Gaselektroden-Gegenelektroden-System, und
Messen eines weiteren resultierenden Wechselstroms oder einer weiteren resultierenden Wechselspannung an dem Gaselektroden-Gegenelektroden-System, und
Bestimmen der Anwesenheit und/oder der Konzentration der weiteren Gasspezies aus dem weiteren resultierenden Wechselstrom oder der weiteren resultierenden Wechselspannung,
umfasst.

3. Verfahren nach Anspruch 1 oder 2, **dadurch gekennzeichnet, dass** aus den resultierenden Wechselströmen und/oder den resultierenden Wechselspannungen jeweils mindestens die Kapazität des Gaselektroden-Gegenelektroden-Systems bestimmt und in die Bestimmung der Anwesenheit und/oder der Konzentration der Gasspezies einbezogen wird.

4. Verfahren nach einem der Ansprüche 1 bis 3, **dadurch gekennzeichnet, dass** aus den resultierenden Wechselströmen und/oder den resultierenden Wechselspannungen jeweils mindestens der Wechselstromleitwert des Gaselektroden-Gegenelektroden-Systems bestimmt und in die Bestimmung der Anwesenheit und/oder der Konzentration der Gasspezies einbezogen wird.

5. Verfahren nach einem der Ansprüche 1 bis 4, **dadurch gekennzeichnet, dass** in den Verfahrensschritten a) und/oder b) und/oder x) die angelegte Wechselspannung mit einer Gleichspannung oder der angelegte Wechselstrom mit einem Gleichstrom überlagert wird.

6. Verfahren nach einem der Ansprüche 1 bis 5, **dadurch gekennzeichnet, dass** die Verfahrensschritte a), b) und gegebenenfalls x)
- zu unterschiedlichen Zeiten an einem einzigen Feldeffekt-basierten Gassensor, oder
- zumindest teilweise gleichzeitig an mehreren Feldeffekt-basierten Gassensoren
durchgeführt werden.

7. Vorrichtung zur Durchführung eines Verfahrens nach einem der vorhergehenden Ansprüche, mit einer Messeinrichtung aufweisend einen Metall-Isolator-Halbleiter-Gassensor, welcher ein Gaselektroden-Gegenelektrodensystem umfasst, eine Spannungsversorgungseinheit zum Beaufschlagen der Messeinrichtung mit einem Wechselstrom, mit einer Steuerungseinheit, die in Abhängigkeit von einem der Steuereinheit vorgegebenen Messprogramm eine Beaufschlagung der Messeinrichtung mit einem Wechselstrom vorgegebener Spannung oder vorgegebener Stromstärke sowie einer vorgegebenen Frequenz veranlasst und mit einer Auswerteeinrichtung zum Erfassen der Messergebnisse des Gassensors.

## Claims

1. Method for detecting two or more gas species in a gas species mixture by means of at least one field effect-based gas sensor having a gas electrode-counterelectrode system with a gas-sensitive electrode and a counterelectrode unit, comprising the following method steps:
a) applying a first AC voltage or a first AC current having a first frequency, at which the gas-sensitive electrode is sensitive to a first gas species, to the gas electrode-counterelectrode system, and
measuring a first resulting AC current or a first resulting AC voltage at the gas electrode-counterelectrode system, and determining the presence and/or the concentration of the first gas species from the first resulting AC current or the first resulting AC voltage; and
b) applying a second AC voltage or a second AC current having a second frequency, at which the gas-sensitive electrode is sensitive to a second gas species, to the gas electrode-counterelectrode system, and
measuring a second resulting AC current or a second resulting AC voltage at the gas electrode-counterelectrode system, and determining the presence and/or the concentration of the second gas species from the second resulting AC current or the second resulting AC voltage, wherein the at least one field effect-based gas sensor is a metal-insulator-semiconductor gas sensor.

2. Method according to Claim 1, **characterized in that** the method comprises after method step b) one or more method steps:
x) applying a further AC voltage or a further AC current having a further different frequency, at which the gas-sensitive electrode is sensitive to a further gas species, to the gas electrode-counterelectrode system, and measuring a further resulting AC current or a further resulting AC voltage at the gas electrode-counterelectrode system, and determining the presence and/or the concentration of the further gas species from the further resulting AC current or the further resulting AC voltage.

3. Method according to Claim 1 or 2, **characterized in that** in each case at least the capacitance of the gas electrode-counterelectrode system is determined from the resulting AC currents and/or the resulting AC voltages and is included in the determination of the presence and/or the concentration of the gas species.

4. Method according to any of Claims 1 to 3, **characterized in that** in each case at least the AC conductance of the gas electrode-counterelectrode system is determined from the resulting AC currents and/or the resulting AC voltages and is included in the determination of the presence and/or the concentration of the gas species.

5. Method according to any of Claims 1 to 4, **characterized in that** in method steps a) and/or b) and/or x) the applied AC voltage is superposed with a DC voltage or the applied AC current is superposed with a DC current.

6. Method according to any of Claims 1 to 5, **characterized in that** method steps a), b) and, if appropriate, x) are carried out
- at different times on a single field effect-based gas sensor, or
- at least partly simultaneously on a plurality of field effect-based gas sensors.

7. Apparatus for carrying out a method according to any of the preceding claims, comprising a measuring device having a metal-insulator-semiconductor gas sensor, which comprises a gas electrode-counterelectrode system, a voltage supply unit for applying an AC current to the measuring device, comprising a control unit, which, depending on a measuring program predefined for the control unit, instigates application of an AC current of predefined voltage or having a predefined current intensity and a predefined frequency to the measuring device, and comprising an evaluation device for registering the measurement results of the gas sensor.

## Revendications

1. Procédé de détection de deux espèces de gaz ou plus dans un mélange d'espèces de gaz avec au moins un détecteur de gaz à effet de champ, lequel présente un système électrode à gaz/contre-électrode avec une électrode sensible au gaz et une unité à contre-électrode, comprenant les étapes de procédé suivantes :
a) application au système électrode à gaz/contre-électrode d'une première tension alternative ou d'un premier courant alternatif à une première fréquence à laquelle l'électrode sensible au gaz est sensible à une première espèce de gaz, et
mesure d'un premier courant alternatif résultant ou d'une première tension alternative résultante sur le système électrode à gaz/contre-électrode, et détermination de la présence et/ou de la concentration de la première espèce de gaz à partir du premier courant alternatif résultant ou de la première tension alternative résultante ; et
b) application au système électrode à gaz/contre-électrode d'une deuxième tension alternative ou d'un deuxième courant alternatif à une deuxième fréquence à laquelle l'électrode sensible au gaz est sensible à une deuxième espèce de gaz, et
mesure d'un deuxième courant alternatif résultant ou d'une deuxième tension alternative résultante sur le système électrode à gaz/contre-électrode, et détermination de la présence et/ou de la concentration de la deuxième espèce de gaz à partir du deuxième courant alternatif résultant ou de la deuxième tension alternative résultante, l'au moins un détecteur de gaz à effet de champ étant un détecteur de gaz en semiconducteur à isolateur métallique.

2. Procédé selon la revendication 1, **caractérisé en ce que** le procédé comprend une ou plusieurs étapes de procédé après l'étape de procédé b) :
x) application au système électrode à gaz/contre-électrode d'une tension alternative supplémentaire ou d'un courant alternatif supplémentaire à une fréquence supplémentaire différente à laquelle l'électrode sensible au gaz est sensible à une espèce de gaz supplémentaire, et
mesure d'un courant alternatif résultant supplémentaire ou d'une tension alternative résultante supplémentaire sur le système électrode à gaz/contre-électrode, et détermination de la présence et/ou de la concentration de l'espèce de gaz supplémentaire à partir du courant alternatif résultant supplémentaire ou de la tension alternative résultante supplémentaire.

3. Procédé selon la revendication 1 ou 2, **caractérisé en ce qu'**au moins la capacité du système électrode à gaz/contre-électrode est à chaque fois déterminée à partir des courants alternatifs résultants et/ou des tensions alternatives résultantes et est incluse dans la détermination de la présence et/ou de la concentration de l'espèce de gaz.

4. Procédé selon l'une des revendications 1 à 3, **caractérisé en ce qu'**au moins la susceptance du système électrode à gaz/contre-électrode est à chaque fois déterminée à partir des courants alternatifs résultants et/ou des tensions alternatives résultantes et est incluse dans la détermination de la présence et/ou de la concentration de l'espèce de gaz.

5. Procédé selon l'une des revendications 1 à 4, **caractérisé en ce que**, dans les étapes de procédé a) et/ou b) et/ou x), la tension alternative appliquée est superposée à une tension continue ou le courant alternatif appliqué est superposé à un courant continu.

6. Procédé selon l'une des revendications 1 à 5, **caractérisé en ce que** les étapes de procédé a), b) et éventuellement x) sont exécutées
- à des moments différents sur un unique détecteur de gaz à effet de champ ou
- au moins partiellement simultanément sur plusieurs détecteurs de gaz à effet de champ.

7. Dispositif pour mettre en oeuvre un procédé selon l'une des revendications précédentes, comprenant un dispositif de mesure présentant un détecteur de gaz en semiconducteur à isolateur métallique, lequel comprend un système électrode à gaz/contre-électrode, une unité d'alimentation électrique pour alimenter le dispositif de mesure avec un courant alternatif, comprenant une unité de commande qui, en fonction d'un programme de mesure prédéfini par l'unité de commande, réalise une alimentation du dispositif de mesure avec un courant alternatif à une tension prédéfinie ou une intensité de courant prédéfinie ainsi qu'à une fréquence prédéfinie, et comprenant un dispositif d'interprétation pour collecter les résultats des mesures du détecteur de gaz.
